# EUROPEAN PATENT APPLICATION

(11) **EP 4 238 787 A1**
(43) Date of publication of application: **06.09.2023**
(21) Application number: 23158885.6
(22) Date of filing: 27.02.2023
(51) Int. Cl.: B60H 1/00, B60H 1/32, H01M 8/04082, H01M 8/04664

(54) **PRE-TRIP SEQUENCE FOR A FUEL CELL FOR A TRAILER REFRIGERATION UNIT**

(30) Priority: 01.03.2022 US 202263315458 P
(71) Applicant: Carrier Corporation, Palm Beach Gardens, FL 33418 (US)
(72) Inventor: BEAUFRERE, Florian, FR 76520 Franqueville Saint Pierre (FR)
(74) Representative: Dehns

(57) **Abstract**

A transport refrigeration unit (TRU) system is provided and includes a fuel cell disposed to generate power for cooling a cargo compartment, a supply of hydrogen disposed to supply hydrogen to the fuel cell, a test button operably coupled to the fuel cell and pre-trip cycle electronics operably coupled to the fuel cell whereby, upon the test button being activated, the pre-trip cycle electronics execute diagnostics and tests of components engaged with or that are components of the fuel cell.

## Description

The following description relates to a trailer refrigeration unit and, more specifically, to a pre-trip sequence for a trailer refrigeration unit equipped with a fuel cell.

Trailers are used to transport goods. Trailers typically have a rectangular shape and an empty interior that can be filled with various types of perishable and non-perishable goods. In some cases, those goods need to be maintained at a certain controlled temperature, and in these cases, trailers can include refrigeration units, which may be referred to as transport refrigeration units (TRUs). A TRU for a trailer can cool or condition the air inside of the trailer so that the goods being transported can be refri gerated.

In conventional TRUs, energy to operate the TRU can be provided by fuel or batteries. More recently, fuel cells that use hydrogen gas to generate energy have been employed.

According to a first aspect of the invention, a transport refrigeration unit (TRU) system is provided and includes a fuel cell disposed to generate power for cooling a cargo compartment, a supply of hydrogen disposed to supply hydrogen to the fuel cell, a test button operably coupled to the fuel cell and pre-trip cycle electronics operably coupled to the fuel cell whereby, upon the test button being activated, the pre-trip cycle electronics execute diagnostics and tests of components engaged with or that are components of the fuel cell.

Optionally, the fuel cell includes a stack of electrodes.

Optionally, a cryo-tank stores the hydrogen.

Optionally, the cryo-tank stores the hydrogen at least at about 350 bars.

Optionally, the test button is at least one of engageable remotely and engageable telematically.

Optionally, the pre-trip cycle electronics execute the tests of the components prior to a transportation run and the pre-trip cycle electronics execute the diagnostics of the components during a transportation run.

Optionally, the components include an electrical subsystem.

Optionally, the components include an anode subsystem.

Optionally, the components include a cathode subsystem.

Optionally, the components include a cooling system.

Optionally, the components include electrical subsystems, an anode subsystem, a cathode subsystem and a cooling system.

According to a second aspect of the invention, a transport refrigeration unit (TRU) system is provided and includes a fuel cell disposed to generate power for cooling a cargo compartment, a supply of hydrogen disposed to supply hydrogen to the fuel cell and pre-trip cycle electronics operably coupled to the fuel cell and configured to automatically execute diagnostics and tests of components engaged with or that are components of the fuel cell according to at least one of a schedule and the TRU system being engaged. The TRU may comprise any of the features recited herein with reference to the first aspect of the invention.

According to a third aspect of the invention, a method for performing pre-trip tests and diagnostics for a component that is engaged with or is a component of a fuel cell of a transport refrigeration unit (TRU) is provided. The method includes validating an operation of a first component, operating a second component based at least in part on validating the operation of the first component, responsive to operating the second component, determining if a first fault of the second component is in effect using the first component, performing a test of a system of which the first and second components are parts, determining if a second fault of the system is in effect using the first sensor and issuing an alarm based at least in part on determining either of the first and second faults are in effect.

Optionally, the method is initiated by a test button, which is coupled to the fuel cell, being activated.

Optionally, the method is executed as a test prior to a transportation run.

Optionally, at least one of the first and second components is a component of an electrical subsystem.

Optionally, at least one of the first and second components is a component of an anode subsystem.

Optionally, at least one of the first and second components is a component of a cathode subsystem.

Optionally, at least one of the first and second components is a component of a cooling system.

Optionally, at least one of the first and second components is a component of one of electrical subsystems, an anode subsystem, a cathode subsystem and a cooling system.

According to another aspect of the invention, there is provided a transport refrigeration unit (TRU) comprising: a fuel cell disposed to generate power for cooling a cargo compartment; a supply of hydrogen disposed to supply hydrogen to the fuel cell; and pre-trip cycle electronics operably coupled to the fuel cell. The TRU may comprise a test button operably coupled to the fuel cell whereby, upon the test button being activated, the pre-trip cycle electronics execute diagnostics and tests of components engaged with or that are components of the fuel cell. The pre-trip cycle electronics may be configured to automatically execute diagnostics and tests of components engaged with or that are components of the fuel cell according to at least one of a schedule and the TRU system being engaged. The TRU may comprise any of the features of the invention as recited herein with reference to the first aspect of the invention and/or the second aspect of the invention.

The method according to the third aspect of the invention may comprise using and/or providing the system according to the first and/or second aspect of the invention. The system of the first and/or second aspect of the invention may be configured to perform, or configured for use in, the system of the first and/or second aspect of the invention.

These and other advantages and features will become more apparent from the following description taken in conjunction with the drawings.

The subject matter, which is regarded as the disclosure, is particularly pointed out and distinctly claimed in the claims at the conclusion of the specification. The foregoing and other features and advantages of the disclosure are apparent from the following detailed description taken in conjunction with the accompanying drawings which are provided by way of example only and in which:
FIG. 1 depicts a tractor trailer system having a transport refrigeration unit and a cargo compartment;
FIG. 2 depicts a transport refrigeration unit for a cargo compartment of the tractor trailer system of FIG. 1;
FIG. 3 is a flowchart of a method for validating a leak sensor operation;
FIG. 4 is a flowchart of a method for performing a diagnostics for a transport refrigeration unit;
FIG. 5 is a side view of a trailer with a refrigeration unit having a fuel cell; and
FIG. 6 is a schematic diagram of components of a refrigeration system.

These and other advantages and features will become more apparent from the following description taken in conjunction with the drawings.

Recent proposals for powering TRUs have involved the use of fuel cells as a power source for refrigeration components. In these cases, fuel cells may be integrated into TRUs in a similar manner as a diesel engine from a structural perspective. From a software perspective, fuel cells are not so integrated. In fact, in current TRU fuel cells, there is no existing software that integrate the fuel cells as a power source. In particular, there is no integration of pre-trip functionality that will perform pre-trip tests before starting transportation runs. Such pre-trip testing is normally important because it helps to detect faults and failed components as well as to confirm system operation.

As will be described below, pre-trip software is integrated into a TRU, in which a fuel cell is integrated, so as to execute a series of tests of the fuel cell. These tests should include electrical components checks, sensors checks, fuel cell power checks and other similar checks. In some cases, only the serviceable components should be integrated into the pre-trip testing. At an end of the testing cycle in a given instance, if a pre-trip fault is detected (i.e., signaled by an alarm), the TRU could be inspected for problems.

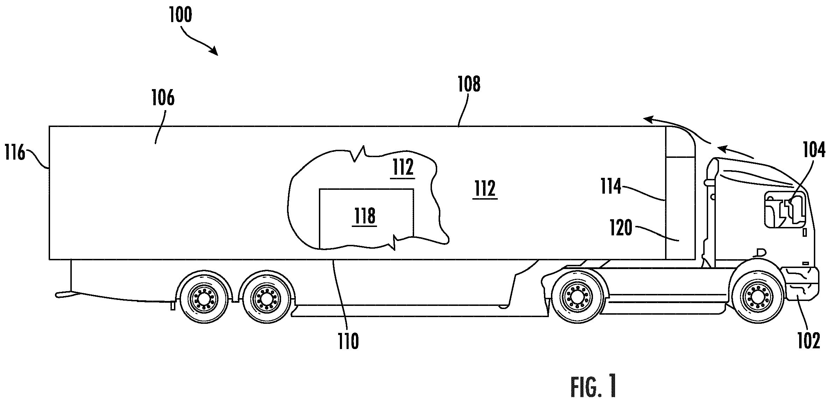

With reference to FIG. 1, a tractor trailer system 100 is provided. The tractor trailer system 100 includes a tractor 102 including an operator's compartment or cab 104 and an engine, which acts as the drive system of the tractor trailer system 100. A trailer 106 is coupled to the tractor 102. The trailer 106 is a refrigerated trailer 106 and includes a top wall 108, a directly opposed bottom wall 110, opposed side walls 112 and a front wall 114, with the front wall 114 being closest to the tractor 102. The trailer 106 further includes a door or doors (not shown) at a rear wall 116, opposite the front wall 114. The walls of the trailer 106 define a cargo compartment. The trailer 106 is configured to maintain a cargo 118 located inside the cargo compartment at a selected temperature through the use of a transport refrigeration unit 120 located on the trailer 106. The transport refrigeration unit 120, as shown in FIG. 1, can be located at or attached to the front wall 114.

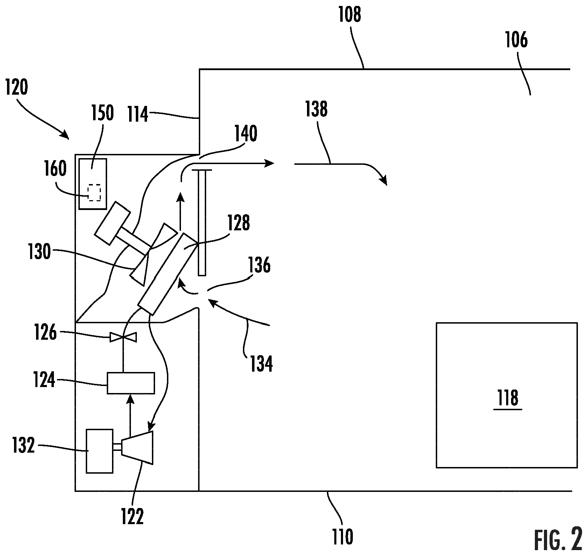

With reference to FIG. 2, the transport refrigeration unit 120 is shown in more detail. The transport refrigeration unit 120 includes a compressor 122, a condenser 124, an expansion valve 126, an evaporator 128 and an evaporator fan 130. The compressor 122 is operably connected to a power source 132, which drives the compressor 122. Airflow is circulated into and through the cargo compartment of the trailer 106 by means of the transport refrigeration unit 120. A return airflow 134 flows into the transport refrigeration unit 120 from the cargo compartment of the trailer 106 through a refrigeration unit inlet 136 and across the evaporator 128 via the evaporator fan 130, thus cooling the return airflow 134. The cooled return airflow 134, now referred to as supply airflow 138, is supplied into the cargo compartment of the trailer 106 through a refrigeration unit outlet 140, which in some embodiments is located near the top wall 108 of the trailer 106. The supply airflow 138 cools the cargo 118 in the cargo compartment of the trailer 106. Also included in the cargo compartment can be a refrigerant leak sensor 150 for detecting a leak of a particular type of refrigerant or substance. It is to be understood that the refrigerant leak sensor 150 can be located in different locations in the system and is not limited by the example shown in FIG. 2. For example, the refrigerant leak sensor 150 can be located in the evaporator section of the transport refrigeration unit 120, a different portion of the cargo compartment of the trailer 106 or another location in the system. Upon detection by the refrigerant leak sensor 150, a signal can be transmitted to controller 160. The controller 160 controls various aspects of the transport refrigeration unit 120 and the transport refrigeration unit power system. The controller 160 can control the compressor 122, the condenser 124, the expansion valve 126, the evaporator 128 and the evaporator fan 130 in addiction to other equipment or sensors. The controller 160 can be connected to the equipment over a wired or wireless connection (connections not shown). In some cases, the controller 160 can be configured to perform a low charge diagnostics calculation which is used to perform various calculations of the refrigeration system of the transport refrigeration unit 120 to determine a state of operation. In other embodiments, the low charge diagnostics calculation can be performed in a cloud network (not shown in FIG. 2).

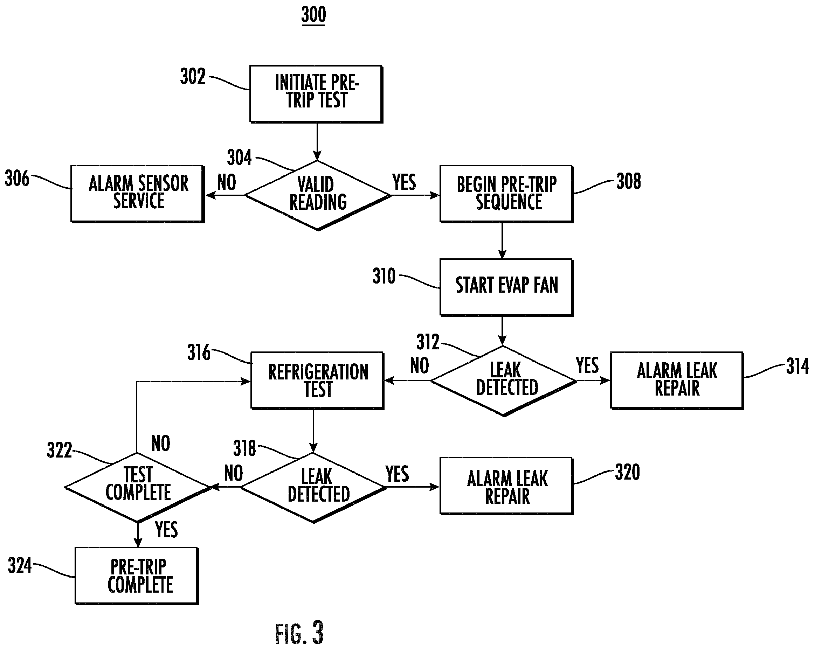

With reference to FIG. 3, a method 300 for validating a refrigerant leak sensor 150 operation is provided. The pre-trip test and sequence ensures the refrigeration system is fully operational prior to the transport refrigeration unit departing from a current location. The pre-trip test includes a test to validate the functionality of the refrigerant leak sensor 150. The pre-trip test is performed by sending a signal to the refrigerant leak sensor 150 from the controller 160 and reading the received signal from the refrigerant leak sensor. Based on the response, the controller 160 can determine whether a valid reading was received indicating the operability of the refrigerant leak sensor.

The method 300 begins at block 302 to initiate a pre-trip test and proceeds to block 304 to validate the operation of a sensor such as the refrigerant leak sensor 150. In a non-limiting example, the controller 160 performs the test by sending a signal to the sensor to test the operation of the sensor. The controller 160 receives a signal from the sensor indicating a current reading of the sensor. In a non-limiting example, sensors can provide an expected output and operate within an expected range (i.e., 0.25-4.75 Volts DC) under normal operating conditions. When such a sensor fails, the failing conditions can cause the sensors to provide a reading that is outside of the expected range indicating a bad or failed sensor. For example, a sensor having a faulty connection or broken wire can create an open circuit providing a 5 VDC reading to the controller 160. In another example, if moisture ingresses into the sensor it would create a short circuit providing a 0 VDC reading indicating a bad sensor. The validation test is not limited to testing the leak sensor, but can also be applied to other sensors and equipment in the system which can be verified during the pre-trip test. This provides a higher reliability in the obtained sensor readings.

If a valid sensor reading is not received by the controller 160, the method 300 continues to block 306 ("No" branch) where a sensor service alarm can be provided to alert an operator or administrator of an issue. The sensor service alarm can indicate that the sensor itself is not functioning properly. The sensor service can include repairing the sensor or replacing the sensor. If a valid sensor reading is received by the controller 160, then the method 300 proceeds to block 308 ("Yes" branch) where the pre-trip sequence begins.

The operational pre-trip sequence begins with testing the evaporator fan 130 to move air within the cargo compartment and sense whether a leak is present. In some embodiments, the evaporator fan 130 is operated. If there are no issues detected, the vapor compression cooling and heating portion of the test begins. The refrigerant leak sensor 150 is continually monitored during operation to determine if a leak is present. If a leak is indicated, action can be taken to remedy the issue. The evaporator fan may be tested and operated along with the refrigeration test.

At block 310, an evaporator fan 130 of the system is started. This allows the airflow to circulate in the environment or cargo compartment to allow the refrigerant leak sensor 150 the opportunity to detect if any leaks are present. That is, if a small amount of refrigerant has leaked in the cargo compartment, the evaporator fan 130 can circulate the airflow through the space so the refrigerant leak sensor 150 can detect the leak.

If the refrigerant leak sensor 150 detects a leak at block 312, a signal can be provided to the controller 150 to indicate the presence of the leak. The method 300 can then continue to block 314 ("Yes" branch) where a leak repair alarm is provided to an operator or administrator. If the refrigerant leak sensor 150 does not detect a leak at block 312 the method 300 continues to block 316 ("No" branch) and performs a refrigeration system test. This can include operating the compressor and other components to circulate refrigerant through the system.

During the refrigeration system test at block 316, the refrigerant leak sensor 150 continues to monitor for the presence of a leak in the monitored area as shown in block 318. If the refrigerant leak sensor 150 detects a leak, a signal can be provided to the controller 160 and indicate a leak repair alarm as shown at block 320 ("Yes" branch). If the refrigerant leak sensor 150 does not detect a leak, the process continues to block 322 to determine if the refrigeration test is complete ("No" branch). If the test is not completed, the method 300 returns to block 316 to continue testing the remaining components of the refrigeration system ("No" branch). Otherwise, in the event the refrigeration test is completed ("Yes" branch), the pre-trip sequence is completed and ends at block 324. It should be understood the method 300 can be repeated whenever the system is initially powered on and started or when manually initiated by an operator or administrator.

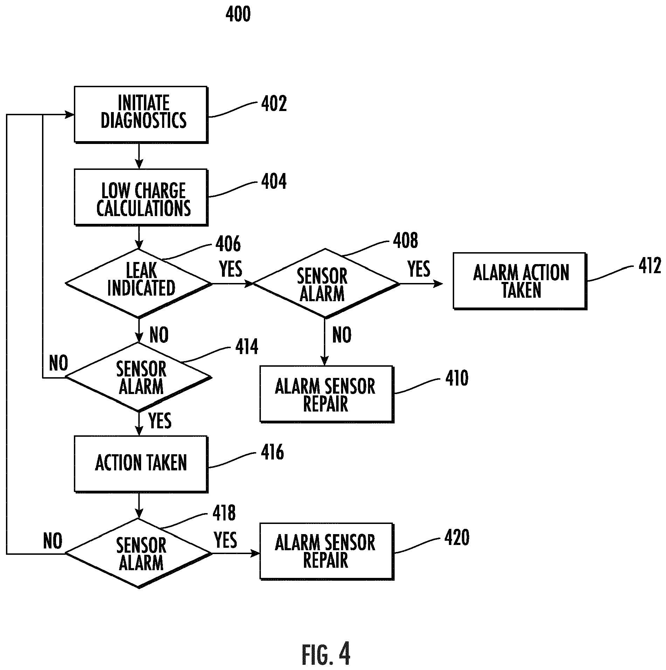

Optionally, after performing the pre-trip test and sequence described by the method 300, diagnostics can be run continually or periodically to monitor for the presence of a leak in the cargo compartment. With reference to FIG. 4, such continual or periodic monitoring will now be described. The diagnostics include calculating refrigerant low charge diagnostics which can be used to aid in identifying a potential false refrigerant sensor alarm.

At block 402, the method 400 for performing system diagnostics including refrigerant leak sensor diagnostics is initiated. Advantageously, the diagnostics are performed to test the operability of the refrigeration system and its components. At block 404 the diagnostics can include performing low charge diagnostics calculations in the controller 160 or system using data that is obtained from various inputs, sensors and other sources. Optionally, the low charge diagnostics calculations can be performed in a cloud-based system. Baseline system operating parameters are defined according to the unit operation conditions, such as but not limited to, ambient temperature, box temperature, engine speed or standby power level, compressor loading and control valve position. A relationship between these parameters is pre-defined in the diagnostics calculations to quantify the expected nominal system operation conditions, such as acceptable pressure, temperature, control valve positions and electrical current values. In one or more embodiments, these measurements are taken by on-board instrumentation. If measurements of these parameters fall outside of the pre-defined acceptable range, diagnostic checks can indicate that a leak has occurred.

The calculations may be compared to the readings and measurements from the sensors in the field that are monitoring the system. For example, the calculations can indicate if a low charge state exists and if so, compare the current status obtained by the sensor. If a low charge exists and the sensor is providing an alarm, the sensor is operating properly. However, if a low charge exists and the sensor is not providing an alarm, a faulty sensor or operating range may be configured for the sensor.

Also, if a normal charge is provided and an alarm is provided by the sensor, the sensor may be a faulty sensor requiring service or replacement. The charge calculations can factor the volume, pressure and temperature related to the refrigerant and refrigerant system to determine the current state.

If there is a refrigerant alarm indicating a high refrigerant level during the operational pre-trip sequence, but the diagnostics indicate that the system is operating within its normal limits, a potential false alarm may be present. In such a case, an extended operation test is conducted to monitor the refrigerant level, as well as the diagnostics calculations. If after a pre-set duration the sensed refrigerant level is still high, or rising, but the diagnostics indicate that the charge level is steady, an alarm indicator is sent indicating that service or further evaluation of the refrigerant leak sensor 150 is required. The diagnostic calculations and sensor readings can be used to provide various levels of information to mitigate the malfunctioning system or detection of a leak in the cargo compartment.

At block 406, it is determined whether the low charge calculations indicate a leak. If so ("Yes" branch), the method 400 continues to block 408 to determine whether the refrigerant leak sensor 150 has detected a leak consistent with the low charge calculations. If the refrigerant leak sensor 150 has not indicated a sensor alarm at block 408, the method 400 continues to block 410 ("No" branch) and provides an alarm sensor repair. However, if at block 408 the refrigerant leak sensor 150 does indicate a sensor alarm, the method 400 proceeds to block 412 ("Yes" branch) indicating an alarm that action should be taken to address the issue. Action can be taken such as but not limited to sending an alarm, exhaust of the refrigerated space, shutting the system down, or other actions can be taken.

Returning to block 406, if the low charge calculations do not indicate a leak, the method 400 continues to block 414 ("No" branch) to determine whether the refrigerant leak sensor 150 has provided a sensor alarm. If at block 414 it is determined that a sensor alarm has been provided, the method 400 continues to block 416 ("Yes" branch) to provide a take action alarm. Next, the method 400 advances to block 418 to recheck if the leak sensor is still indicating a sensor alarm. If so ("Yes" branch), a repair sensor alarm can be provided as shown in block 420 because the issue remains even after servicing or replacing the leak sensor. Otherwise ("No" branch), the method continues to block 402 to continue the diagnostics. Otherwise, if no sensor alarm is indicated by the refrigerant leak sensor 150 at block 414 the method 400 returns to block 402 ("No" branch) and continues to perform the diagnostics and leak monitoring for the refrigeration system.

Optionally, if a large leak is detected by the refrigerant leak sensor 150, but the diagnostics indicate the refrigeration system is operating within its operational limits, a system evacuation can be performed. The large leak can be determined by using a configurable threshold. Following the system evacuation, if the refrigerant alarm still indicates the refrigerant leak remains present, the operational diagnostics can be utilized to determine whether a potential false alarm has occurred.

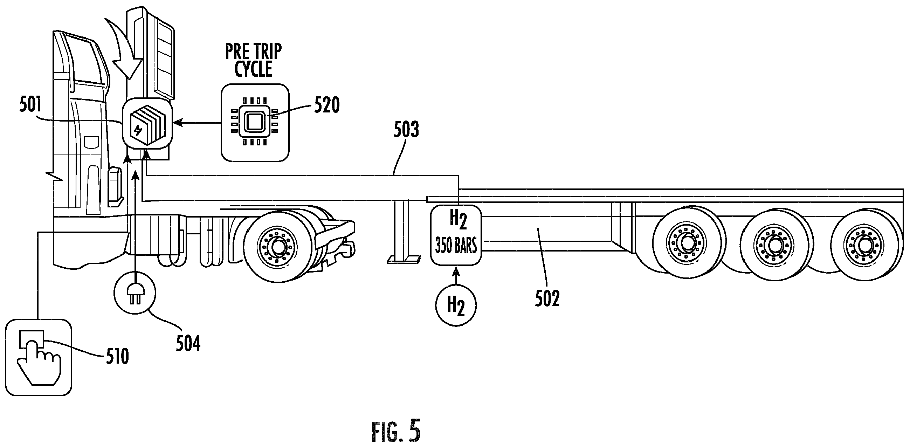

With reference to FIG. 5, the power source 132 of FIG. 2 can include or be provided as a fuel cell 501 that is operably receptive of oxygen gas and hydrogen. The hydrogen can be provided as cryo-compressed hydrogen that is stored in a cryo-tank 502 or as hydrogen in another liquid or gaseous form. In the case of the hydrogen being cryo-compressed hydrogen, the cryo-compressed hydrogen can be maintained at a pressure of at least about 350 bars in the cryo-tank 502 and can be transmitted to the fuel cell 501 along conduit 503 as needed. While the cryo-compressed hydrogen is transmitted along the conduit 503, a pressure of the cryo-compressed hydrogen can be decreased and its temperature can be increased to a point at which it is usable in the fuel cell 501. The fuel cell 501 can include a stack of electrodes and can be operably coupled to an auxiliary power source 504 (i.e., for recharging). A pre-trip test button 510 and pre-trip cycle electronics 520 can be operably coupled to the fuel cell 501. Although described herein to include a pre-trip test button 510 to initiate the test, it should be appreciated that automated pre-trip (i.e., without the requirement to engage a button) is within the scope of the present disclosure.

When activated, the pre-trip test button 510 can engage the pre-trip cycle electronics 520 to conduct various pre-trip diagnostics and tests of the transport refrigeration unit 120 particularly pertaining to operations of at least the fuel cell 501. The diagnostics and tests can include, but are not limited to, checks of electrical components, checks of sensors and fuel cell power checks to be executed prior to a transportation run beginning and, in some cases, during a transportation run. These pre-trip diagnostics and tests can be run similarly to the methods described above with reference to FIGS. 3 and 4.

In accordance with embodiments, the pre-trip test button 510 can be effectively provided as a remote or telematic element whereby engagement of the pre-trip cycle electronics 520 can be initiated remotely. Alternatively, the engagement of the pre-trip cycle electronics 520 can be initiated on at least one of a preset schedule and/or automatically (i.e., the pre-trip cycle electronics 520 can be engaged every time that the TRU 120 is switched on).

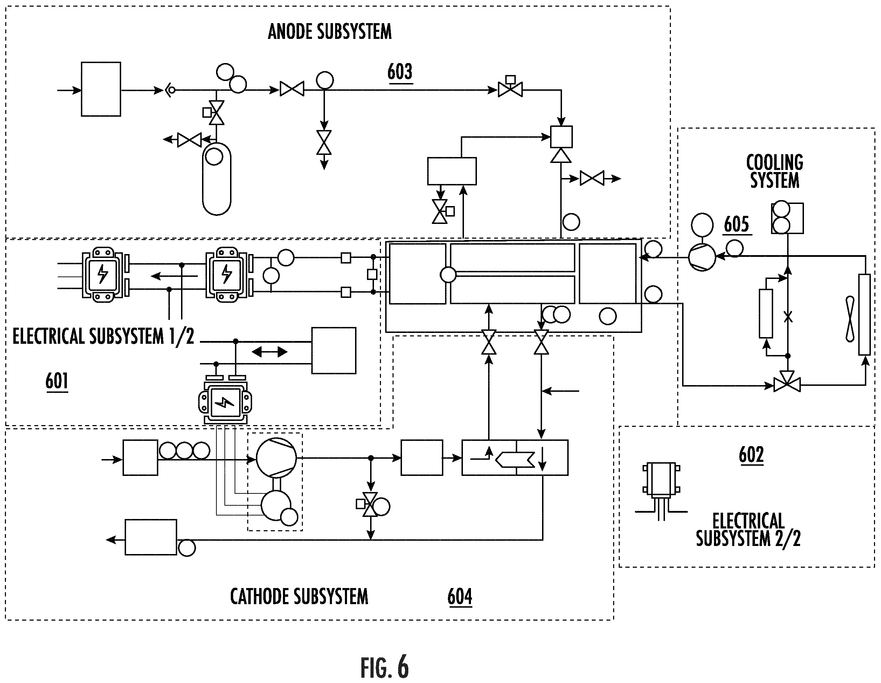

With reference to FIG. 6, the various systems that can be analyzed during the pre-trip diagnostics and tests include those components which engage with or are components of the fuel cell 501. These include, but are not limited to, electrical subsystem 1/2 601, electrical subsystem 2/2 602, anode subsystem 603, cathode subsystem 604 and cooling system 605. The electrical subsystem 1/2 601 includes stack relays, an inverter, a converter and a battery. The electrical subsystem 2/2 602 includes a fuel cell control unit. The anode subsystem 603 includes multiple valves, a hydrogen gas injector, a pump and a vapor separator. The cathode subsystem 604 includes an air filter, an electric air charger, an intercooler, a humidifier, multiple valves and a muffler/silencer. The cooling system 605 includes a bypass valve, an ion exchanger, a radiator and cooling fan, an equalizing tank and a cooling pump. The normal operation of these and other similar features will be understood to a person of skill in the art and need not be described in detail.

With reference back to FIG. 3, when the pre-trip test button 510 is activated prior to a transportation run, the operations of the method of FIG. 3 can be conducted with respect to any one or more of the components listed above with respect to FIGS. 5 and 6. In some cases, only those components that are serviceable might be integrated into the pre-trip tests. Similarly, with reference back to FIG. 4, when the pre-trip test button 510 is activated during a transportation run (i.e., where the pre-trip test button is accessible to a driver/operator or passenger), the operations of the method of FIG. 4 can be conducted with respect to any one or more of the components listed above with respect to FIGS. 5 and 6. As above, in some cases, only those components that are serviceable might be integrated into the diagnostics.

Technical effects and benefits of the present disclosure are the provision of a system whereby system operations can be checked before transportation runs. This can allow for identification of faulty and failed components, proactive maintenance increased up-time and an optimized total cost of ownership.

While the disclosure is provided in detail in connection with only a limited number of embodiments, it should be readily understood that the disclosure is not limited to such disclosed embodiments. Rather, the disclosure can be modified to incorporate any number of variations, alterations, substitutions or equivalent arrangements not heretofore described, but which are commensurate with the spirit and scope of the disclosure. Additionally, while various embodiments of the disclosure have been described, it is to be understood that the exemplary embodiment(s) may include only some of the described exemplary aspects. Accordingly, the disclosure is not to be seen as limited by the foregoing description, but is only limited by the scope of the appended claims.

The following clauses recite features of the invention which may or may not currently be claimed, but which may serve as basis for an amendment and/or one or more divisional applications.
1. A transport refrigeration unit (TRU) system, comprising:
   a fuel cell disposed to generate power for cooling a cargo compartment;
   a supply of hydrogen disposed to supply hydrogen to the fuel cell;
   a test button operably coupled to the fuel cell; and
   pre-trip cycle electronics operably coupled to the fuel cell whereby, upon the test button being activated, the pre-trip cycle electronics execute diagnostics and tests of components engaged with or that are components of the fuel cell.
2. The TRU system according to clause 1, wherein the fuel cell comprises a stack of electrodes.
3. The TRU system according to clause 1, further comprising a cryo-tank to store the hydrogen.
4. The TRU system according to clause 3, wherein the cryo-tank stores the hydrogen at least at about 350 bars.
5. The TRU system according to clause 1, wherein the test button is at least one of engageable remotely and engageable telematically.
6. The TRU system according to clause 1, wherein:
   the pre-trip cycle electronics execute the tests of the components prior to a transportation run, and
   the pre-trip cycle electronics execute the diagnostics of the components during a transportation run.
7. The TRU system according to clause 1, wherein the components comprise an electrical subsystem.
8. The TRU system according to clause 1, wherein the components comprise an anode subsystem.
9. The TRU system according to clause 1, wherein the components comprise a cathode subsystem.
10. The TRU system according to clause 1, wherein the components comprise a cooling system.
11. The TRU system according to clause 1, wherein the components comprise electrical subsystems, an anode subsystem, a cathode subsystem and a cooling system.
12. A transport refrigeration unit (TRU) system, comprising:
   a fuel cell disposed to generate power for cooling a cargo compartment;
   a supply of hydrogen disposed to supply hydrogen to the fuel cell; and
   pre-trip cycle electronics operably coupled to the fuel cell and configured to automatically execute diagnostics and tests of components engaged with or that are components of the fuel cell according to at least one of a schedule and the TRU system being engaged.
13. A method for performing pre-trip tests and diagnostics for a component that is engaged with or is a component of a fuel cell of a transport refrigeration unit (TRU), the method comprising:
   validating an operation of a first component;
   operating a second component based at least in part on validating the operation of the first component;
   responsive to operating the second component, determining if a first fault of the second component is in effect using the first component;
   performing a test of a system of which the first and second components are parts;
   determining if a second fault of the system is in effect using the first sensor; and
   issuing an alarm based at least in part on determining either of the first and second faults are in effect.
14. The method according to clause 13, wherein the method is initiated by a test button, which is coupled to the fuel cell, being activated.
15. The method according to clause 13, wherein the method is executed as a test prior to a transportation run.
16. The method according to clause 13, wherein at least one of the first and second components is a component of an electrical subsystem.
17. The method according to clause 13, wherein at least one of the first and second components is a component of an anode subsystem.
18. The method according to clause 13, wherein at least one of the first and second components is a component of a cathode subsystem.
19. The method according to clause 13, wherein at least one of the first and second components is a component of a cooling system.
20. The method according to clause 13, wherein at least one of the first and second components is a component of one of electrical subsystems, an anode subsystem, a cathode subsystem and a cooling system.

## Claims

1. A transport refrigeration unit (TRU) system, comprising:
a fuel cell disposed to generate power for cooling a cargo compartment;
a supply of hydrogen disposed to supply hydrogen to the fuel cell;
a test button operably coupled to the fuel cell; and
pre-trip cycle electronics operably coupled to the fuel cell whereby, upon the test button being activated, the pre-trip cycle electronics execute diagnostics and tests of components engaged with or that are components of the fuel cell.

2. The TRU system according to claim 1, wherein the fuel cell comprises a stack of electrodes.

3. The TRU system according to claim 1 or 2, further comprising a cryo-tank to store the hydrogen; optionally
wherein the cryo-tank stores the hydrogen at least at about 350 bars.

4. The TRU system according to claim 1, 2 or 3, wherein the test button is at least one of engageable remotely and engageable telematically.

5. The TRU system according to any preceding claim, wherein:
the pre-trip cycle electronics execute the tests of the components prior to a transportation run, and
the pre-trip cycle electronics execute the diagnostics of the components during a transportation run.

6. The TRU system according to any preceding claim, wherein the components comprise an electrical subsystem.

7. The TRU system according to any preceding claim, wherein the components comprise an anode subsystem.

8. The TRU system according to any preceding claim, wherein the components comprise a cathode subsystem.

9. The TRU system according to any preceding claim, wherein the components comprise a cooling system.

10. The TRU system according to any preceding claim, wherein the components comprise electrical subsystems, an anode subsystem, a cathode subsystem and a cooling system.

11. A transport refrigeration unit (TRU) system, comprising:
a fuel cell disposed to generate power for cooling a cargo compartment;
a supply of hydrogen disposed to supply hydrogen to the fuel cell; and
pre-trip cycle electronics operably coupled to the fuel cell and configured to automatically execute diagnostics and tests of components engaged with or that are components of the fuel cell according to at least one of a schedule and the TRU system being engaged.

12. A method for performing pre-trip tests and diagnostics for a component that is engaged with or is a component of a fuel cell of a transport refrigeration unit (TRU), the method comprising:
validating an operation of a first component;
operating a second component based at least in part on validating the operation of the first component;
responsive to operating the second component, determining if a first fault of the second component is in effect using the first component;
performing a test of a system of which the first and second components are parts;
determining if a second fault of the system is in effect using the first sensor; and
issuing an alarm based at least in part on determining either of the first and second faults are in effect.

13. The method according to claim 12, wherein the method is initiated by a test button, which is coupled to the fuel cell, being activated.

14. The method according to claim 12 or 13, wherein the method is executed as a test prior to a transportation run.

15. The method according to claim 12, 13 or 14, wherein at least one of the first and second components is a component of an electrical subsystem; and/or
wherein at least one of the first and second components is a component of an anode subsystem; and/or
wherein at least one of the first and second components is a component of a cathode subsystem; and/or
wherein at least one of the first and second components is a component of a cooling system.
